# EUROPEAN PATENT APPLICATION

(11) **EP 0 981 085 A2**
(43) Date of publication of application: **23.02.2000**
(21) Application number: 99202617.9
(22) Date of filing: 12.08.1999
(51) Int. Cl.: G06F 9/46

(54) **Application controlled data flow between processing tasks**

(30) Priority: 12.08.1998 US 96290 P
(71) Applicant: Texas Instruments Incorporated, Dallas, Texas 75251 (US)
(72) Inventor: Brewer, Jason M., Dallas, Texas 70206 (US); Woolsey, Matthew E., Plano, Texas 75023 (US)
(74) Representative: Holt, Michael

(57) **Abstract**

In accordance with a preferred embodiment of the present invention, there is provided a way to reduce these memory copy operations by a Java application via API creating task input and output channels which are used to direct communication between Java applications (40), host tasks (48), DSP tasks (60) and device drivers (54). Tasks and devices read input data through task input channels and write output data through task output channels. The channels are connected using a system I/O manager (29) that controls passing data in frame buffers between channels and the tasks or devices to which they are connected.

## Description

### CROSS-REFERENCE TO RELATED APPLICATIONS

This application is related to U.S. Serial No. 08/995,606 filed 12/22/97 entitled "Mobile Information Services Platform" to Woolsey et al. and U.S. Serial No. 08/995,600 filed 12/22/97 entitled "Mobile Communications System with Cross Compiler and Cross Linker" to Woolsey et al. These applications are incorporated herein by reference.

### TECHNICAL FIELD OF THE INVENTION

This invention relates to data flow between processing tasks and more particularly to application controlled data flow between the processing tasks.

### BACKGROUND OF THE INVENTION

Handheld mobile wireless electronic devices are becoming more in demand as the functionality of the devices increases. Personal Digital Assistants (PDAs) are in widespread use. Smartphones which combine some of the capabilities of a cellular phone and a PDA are predicted to have a significant impact on communications in the near future.

Some devices currently incorporate one or more DSPs (Digital Signal Processors) or other co-processors for providing certain discrete features, such as voice recognition and a general processor for the other data processing functions. The flow between processing tasks in the prior art is implemented by native code such as C or assembly language. This is very inflexible because it does not allow for new applications in other languages. Smartphones needs a more dynamic application environment.

### SUMMARY OF THE INVENTION

In accordance with one embodiment of the present invention, the flow between processing tasks is provided by a language application such as Java with an extension program interface to communicate between tasks on one processor and tasks on a second processor.

In accordance with one preferred embodiment of the present invention, a Java application creates an input channel on a network driver and connects it to an output channel from a DSP task such that output from the DSP task is sent directly over the network without passing through the Java application by use of an I/O manager.

### DESCRIPTION OF THE DRAWINGS

The present invention will now be further described, by way of example, with reference to certain exemplary embodiments illustrated in the accompanying drawings in which:
Fig. 1 illustrates a block diagram of a platform architecture particularly suited for general wireless data processing;
Fig. 2 illustrates data path for a network bitstream to a DSP task through Java according to one embodiment of the present invention;
Fig. 3 illustrates a functional block diagram for the system according to Figs. 1 and 2;
Fig. 4 illustrates an overview of the system according to one preferred embodiment of the present invention;
Fig. 5 illustrates the hierarchy for the system of Fig. 4;
Fig. 6 illustrates data path for a network bitstream to a DSP task via the I/O manager;
Fig. 7 illustrates the data path for DSP task to host device driver through I/O manager;
Fig. 8 illustrates system component relations to I/O manager;
Fig. 9 illustrates a channel with its associated frame buffer;
Fig. 10 illustrates implementation of an I/O manager interface for a network driver;
Fig. 11 illustrates software module hierarchy showing Java, I/O manager and a network device; and
Fig. 12 illustrates a multiple distributed task.

### DESCRIPTION OF PREFERRED EMBODIMENTS OF THE PRESENT INVENTION

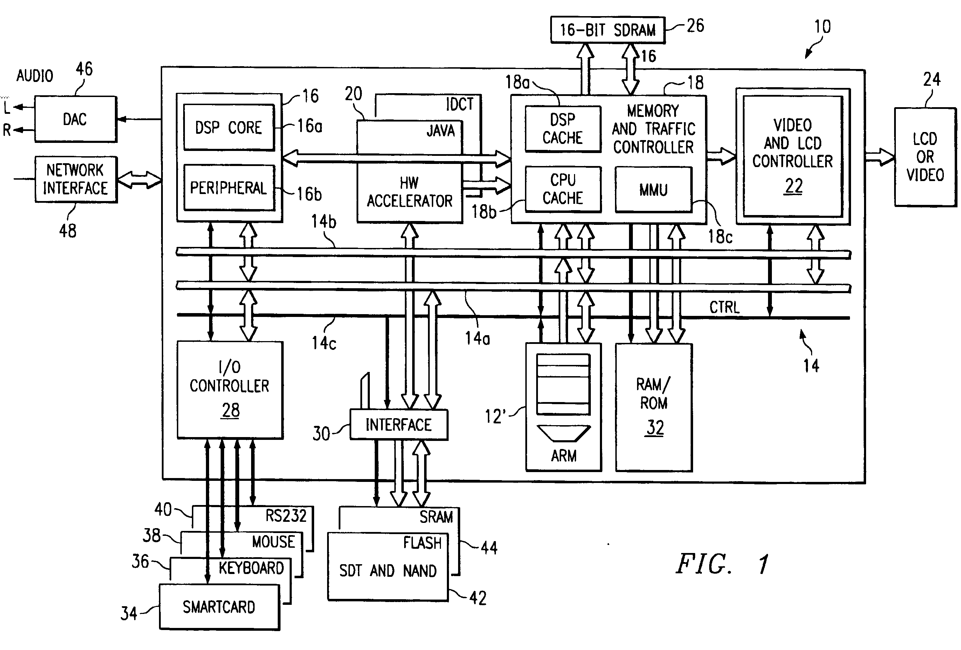

Fig. 1 illustrates a preferred embodiment of a general wireless data platform architecture, which could be used for example, in the implementation of a Smartphone or PDA. The wireless data platform 10 includes a general purpose (Host) processor 12 coupled to bus structure 14, including data bus 14a, address bus 14b and control bus 14c. One or more DSPs (or other co-processors) 16, including the core processor 16a and the peripheral interface 16b, are coupled to bus 14 and to memory traffic controller 18, which includes a DSP cache memory 18a, a CPU cache 18b, and a MMU (memory management unit) 18c. A hardware accelerator circuit 20 (for accelerating a portable language such as Java™) and a video LCD controller 22 are also coupled to the memory and traffic controller 18. Java is a trademark of Sun Microsystems Inc. The output of the video and LCD controller is coupled to a LCD or video display 24.

Memory and traffic controller 18 is coupled to bus 14 and to the main memory 26, shown as an SDRAM (synchronous dynamic random access memory). Bus 14 is also connected to I/O controller 28, interface 30 and RAM/ROM 32. A plurality of devices could be coupled to the wireless data platform 10, such as smartcard 34, keyboard 36, mouse 38 or one or more serial ports 40, such as a USB (universal serial bus) port or an RS232 serial port. Interface 30 can couple to a flash memory card 42 and/or a DRAM card 44. The peripheral interface 16b can couple the DSP 16 to a DAC (digital to analog converter) 46, a network interface 48 or to other devices.

The wireless data platform 10 of Fig. 1 utilizes both a general purpose processor 12 and a DSP 16. Unlike current devices in which the DSP 16 is dedicated to specific fixed functions, the DSP 16 of Fig. 1 can be used for any number of functions. This allows the user to derive the full benefit of the DSP 16.

One main area in which the DSP 16 can be used is in connection with the man-machine interface (MMI). Importantly, functions like speech recognition, image and video compression and decompression, data encryption, text-to-speech conversion, and so on, can be performed much more efficiently using the DSP 16. The present architecture allows new functions and enhancement to be easily added to wireless data platform 10.

It should be noted that the wireless data platform 10 is a general block diagram and many modifications could be made. For example, Fig. 1 illustrates separate DSP and processor caches 18a and 18b. As would be known to one skilled in the art, a unified cache could also be used. Further, the hardware acceleration circuit 20 is an optional item. Such devices speed the execution of languages such as Java; however, the circuit is not necessary for operation of the device. Further, although the illustrated embodiment shows a single DSP, multiple DSPs (or other co-processors) could be coupled to the buses.

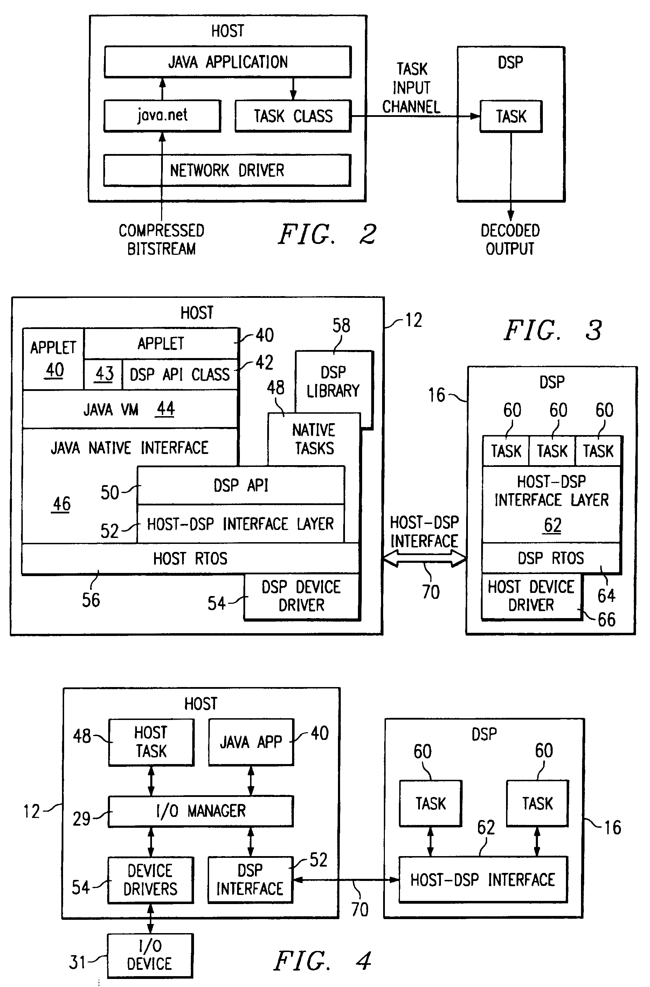

Java object-oriented programming language through an extension API can be used to communicate between tasks executed on a host processor and tasks on an attached coprocessor such as a Digital Signal Processor (DSP) as shown in Fig. 2. A Java application can read data results from one processing task and pass it to another task for further processing. A task input channel can be created on a DSP to allow communication with the task from Java. A Java application running on a host machine such as a microprocessor or microcontroller writes data to the task input channel and that data is sent, for example, to a DSP task. A task output channel can be created on a DSP task that allows a Java application to read from the task. In this manner, Java applications can communicate with DSP tasks through channels created by the Java application and API. The host-DSP interface driver handles moving the channel data to the DSP. As illustrated in Fig. 2, the DSP task is accepting an input bitstream arriving from the network. In order for a Java application to pass this data to the task, it must create a network socket to read the data and then pass the data to the DSP through a task input channel that it has created for the task. In the native implementation of these calls, the data will arrive from the network and be copied into a buffer supplied by Java. There may be another buffer copy within the Java virtual machine before the data is returned to Java. In order to write this data to the task input channel, the buffer would be copied into another native buffer that could then be passed to the DSP.

Fig. 3 illustrates a functional software architecture for the wireless data platform 10. This block diagram presumes the use of Java; it should be noted that languages other than Java could be used as well. Functionally, the software is divided into two groups, Host processor software and DSP software. The Host software includes one or more applets 40. The DSP API classes (also TIDSP classes) 42 are a Java API package for Java applications or applets to access the functionality of the DSP API 50 and Host DSP Interface Layer 52. The task class in Fig. 2 is one of the classes 42. Personal classes 43 include Java.net for network interfacing and Java.awl for user interfacing. A Java virtual machine (VM) 44 interprets the applets. The Java native interface 46 is the method which the Java VM executes host processor or platform specific code. Native tasks 48 are non-Java programs which can be executed by the Host processor 12 without using the Java native interface. The DSP API 50, described in greater detail hereinbelow, is an API (application program interface) used by the Host 12 to call to make use of the capabilities of the DSP 16. The Host-DSP Interface Layer 52 provides an API for the Host 12 and DSP 16 to communicate with each other, with other tasks, or other hardware using channels via the Host-DSP Communication Protocol. The DSP device driver 54 is the Host based device driver for the Host RTOS 56 (real time operating system) to communicate with the DSP 16. The Host RTOS 56 is an operating system, such as NUCLEUS PLUS by Accelerated Technology Incorporated. Alternatively, a non-real time operating system, such as WINDOWS CE by Microsoft Corporation, could be used. The DSP Library 58 contains programs stored for execution on the DSP 16.

On the DSP side, one or more tasks 60 can be stored in memory for execution by the DSP 16. As described below, the tasks can be moved in and out of the memory as desired, such that the functionality of the DSP is dynamic, rather than static. The Host-DSP Interface layer 62 on the DSP side performs the same function as the Host-DSP Interface layer 52 on the Host side, namely it allows the Host 12 and DSP 16 to communicate. The DSP RTOS 64 is the operating system for the DSP processor. The Host Device driver 66 is a DSP based device driver for the DSP RTOS 64 to communicate with the Host 12. The Host-DSP Interface 70 couples the DSP 16 and Host 12.

In operation, the software architecture shown in Fig. 3 uses the DSP 16 as a variable function device, rather than a fixed function device as in the prior art. Accordingly, the DSP functions can be downloaded to the mobile device incorporating the architecture of Fig. 3 to allow the DSP 16 to perform various signal processing functions for the Host 12.

The DSP-API provides a device independent interface from the Host 12 to the DSP 16. The functions provide the Host 12 with the ability to load and schedule tasks on the DSP 16 and to control and communicate with those tasks. The API functions include calls to: determine the DSP's available resources, create and control Host 12 and DSP tasks, create and control data channels between Host 12 and DSP tasks, and communicate with tasks. Each function returns a BOOLean result, which will be SUCCESS for a successful operation, or FAILURE. If the result is FAILURE, the errcode should be checked to determine which error occurred.

The following code shows how the example in Fig. 2 and discussed in the background might be implemented in Java. A Java application is reading a stream of compressed data from the network and writing it to a DSP task input channel. The purpose of the DSP task is to decode the bitstream. Handling DSP output data will be discussed in another example. 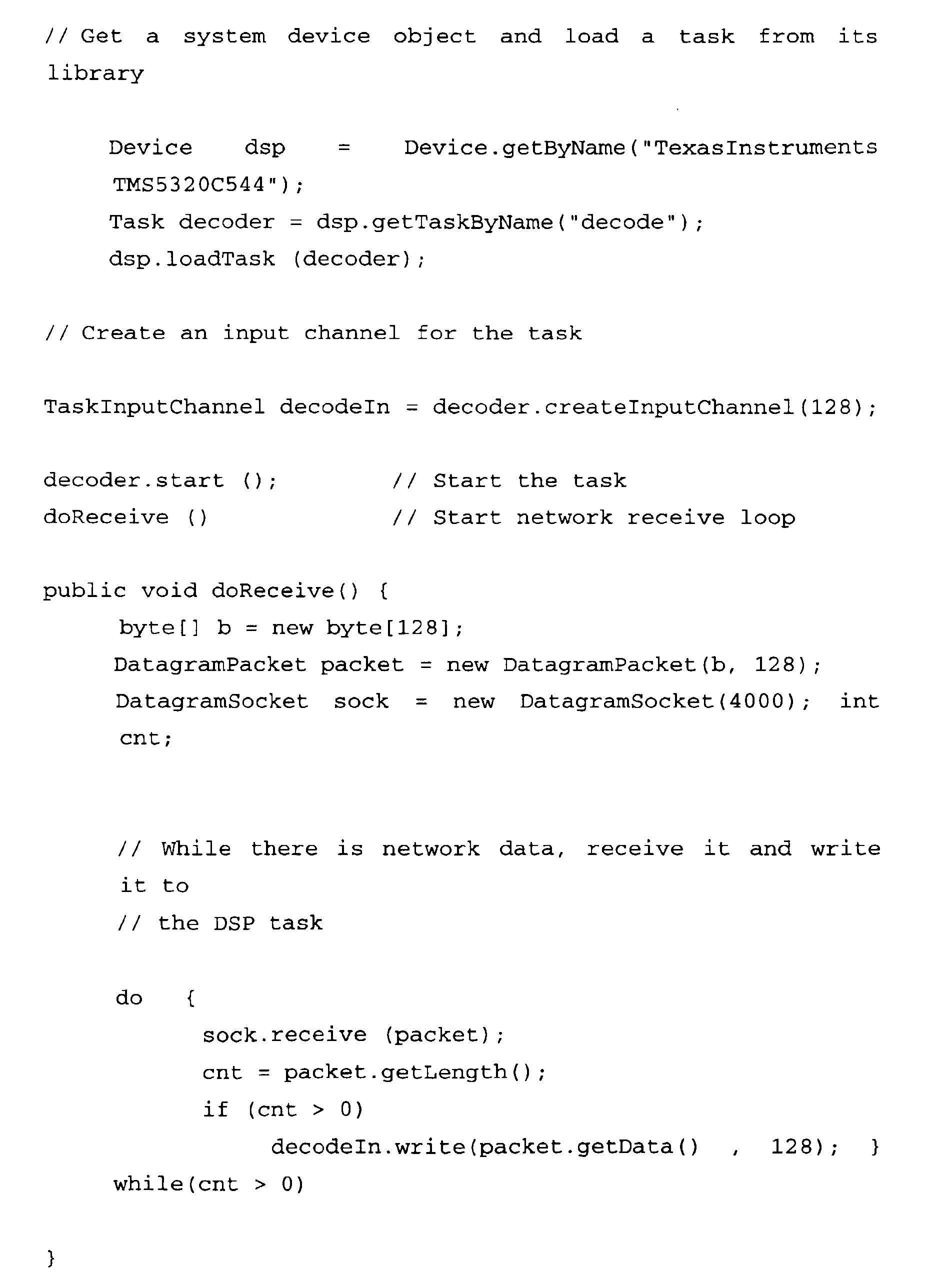 This example accomplishes its goal of writing data from Java to a DSP task. The network data must go through Java to get to the DSP task input channel. This is inefficient. A preferred embodiment follows wherein the memory copy operations are reduced using an I/O manager.

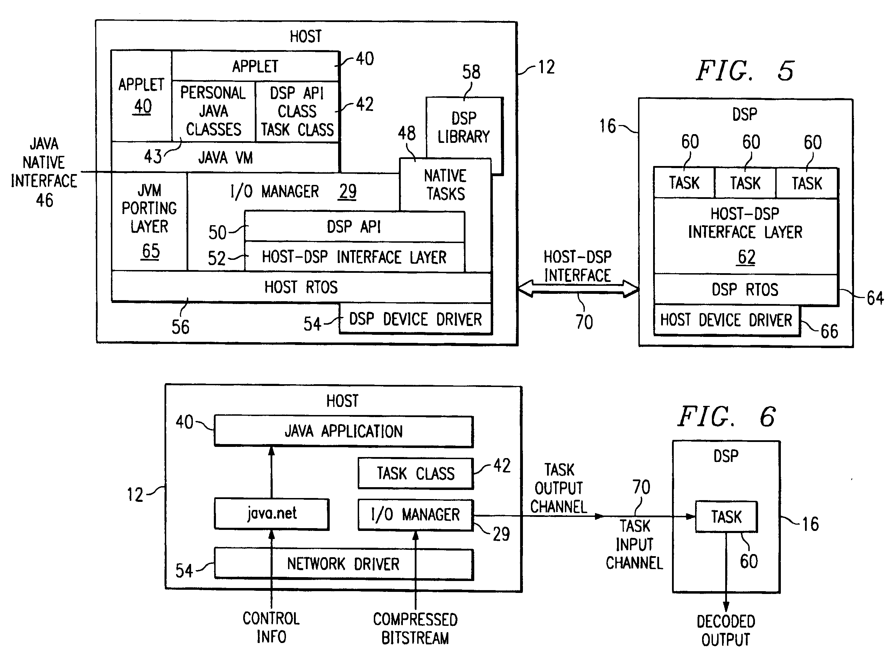

In accordance with a preferred embodiment of the present invention, the communication flow remains in the native processing environment without the overhead constraints associated with data passing through the Java Virtual Machine (task class) as shown in Figs. 2 and 3. Fig. 4 illustrates an overview of the preferred embodiment of the present invention. Fig. 5 is a functional diagram as in Fig. 3 for the present invention showing the hierarchy. In Fig. 4, the host 12 includes a Java application 40 (applet), host task 48, DSP interface 52 and device drivers 54 all connected to a system input/output (I/O) manager 29. In Fig. 5 the Java native interface layer 46, the I/O manager 29 and a JVM porting layer 65 is shown. The DSP 16 includes DSP tasks 60 connected to the channel interface including layer 62 in Fig. 5. The host 12 is connected to the DSP 16 via the Host-DSP interface layer 52 in Fig. 5, Host-DSP Interface 70 and the Host-DSP interface 62. The interface 70 includes a parallel or serial bus or shared memory. The communication is through the use of task input and output channels which are used to direct communication between Java applications 40, host tasks 48, DSP tasks 60, and device drivers 54 and 66. Tasks and devices read input data through task input channels and write output data through task output channels. The reading and writing is to a socket such as a UNIX socket that lets an application access a network protocol by "opening a socket" and declaring a destination. When Java makes a request for transfer to the I/O manager, the system I/O manager 29 controls passing data in frame buffers between channels and the tasks or devices to which they are connected. In a program these frame buffers are created in a reserved part of memory to hold the data from any task 48, 60 or device 54 in Fig. 4 that are read or written. The channel is a set of frame buffers. Input and output is only constrained to these task channels if it needs to be connected to another task channel. The tasks register with the I/O manager 29 and the manager 29 sets the location (buffer) the output channel tasks is to write to and the location the input channel is to read from.

This architecture allows for several data paths. A Java application 40 can communicate with a DSP task 60 through the task's input channel. A DSP task 60 can take input directly from an I/O device 31 if the I/O device 31 has an output channel that is connected to the DSP task's input channel. Similarly, a DSP task can write output directly to an I/O device 31 if the task's output channel is connected to an input channel on the I/O device 31. The source of the data may be, for example, a network, a microphone, a camera or a file system. The data output device may be a speaker, video display, network or a file system.

Task input and output channels are not necessarily restricted to DSP tasks. They might be used to handle I/O for other devices in the system. In Fig. 6, the network device has an interface to a system I/O manager 29. Device drivers that can read or write data in a channel format implement a standard interface to this module. This allows the I/O manager 29 to connect input and output channels to devices within the system. With this in place, Java applications 40 do not need to participate in the handling of data that they don't need to modify. Their role is simplified to setting up, connecting, and controlling task channels. As illustrated in Fig. 4, the control information is applied via the network driver 54 and Java net 43 (one of the personal Java classes) to the Java application 40 as in Fig. 1 but the compressed bitstream is applied to the task in the DSP via the I/O manager 29.

This eliminates the extra memory copy previously necessary to pass a network bitstream to a DSP task. The Java application 40 still has a network socket open to receive any necessary control information for the bitstream, but the actual bitstream is passed through a task output channel on the network driver 54 to a task input channel on the DSP 23. Now, only a single memory copy is needed to pass the data buffer to the DSP task channel.

The code example that follows shows how the above might be implemented with an interface to an I/O manager 29 that implements channel control and connections. The purpose of the code is the same as in the previous example. The control stream was added to the diagram to illustrate that a Java application would still use the standard Java network package for standard network communication.

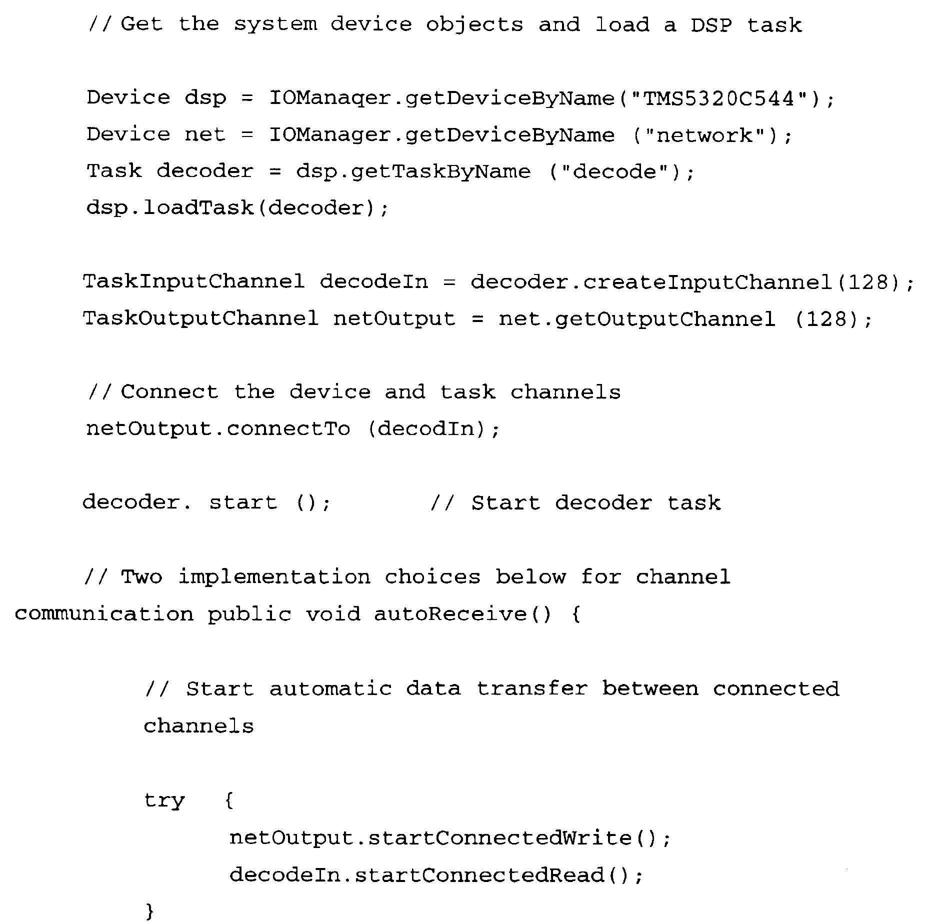

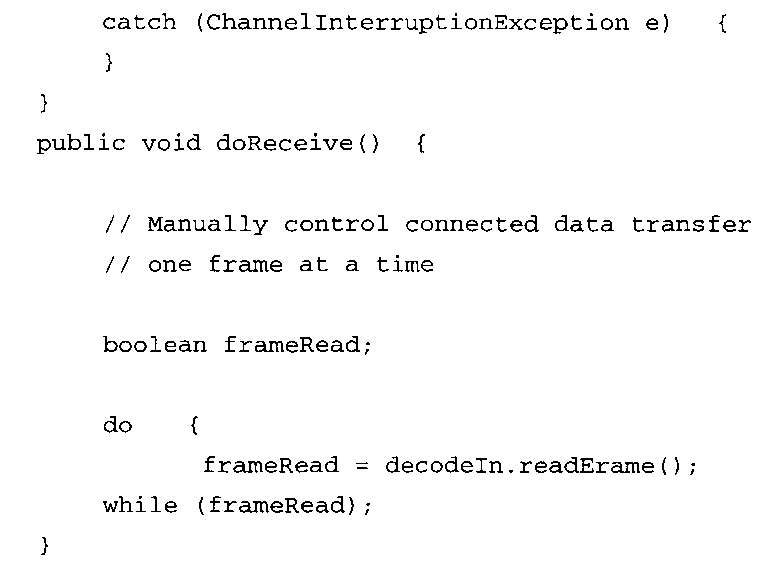

Two different methods (autoreceive and doreceive) for controlling communication are shown in the previous code example. In the first method, Java starts the data transfer process off and lets the I/O manager 29 handle continuous data transfer. In the second method, Java manually instructs the I/O manager 29 to transfer one frame at a time. Since the two channels are connected, a read on the output channel automatically transfers the read data to the connected input channel.

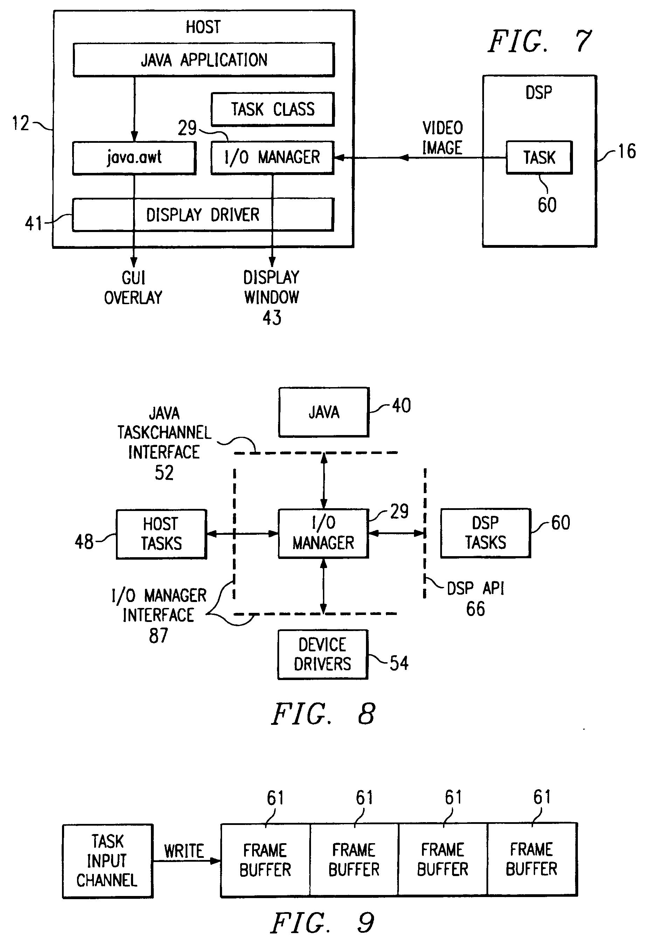

The I/O manager 29 will also handle channels for writing data from tasks 25 to a host device such as a display 43, (Display Window, see Fig. 7). A DSP task 25 might have a video image written to its task output channel. This could be connected to a task input channel for the display device via the I/O manager 29. Java can still handle the display directly through its AWT (Abstract Windowing Toolkit) classes, but the I/O manager 29 handles display data from other tasks through the display driver I/O manager interface 41. This data might then be Graphical User Interface (GUI) overlaid by Java AWT display data from Java application 40.

This example code shows how a DSP task might be connected to a host device from Java.

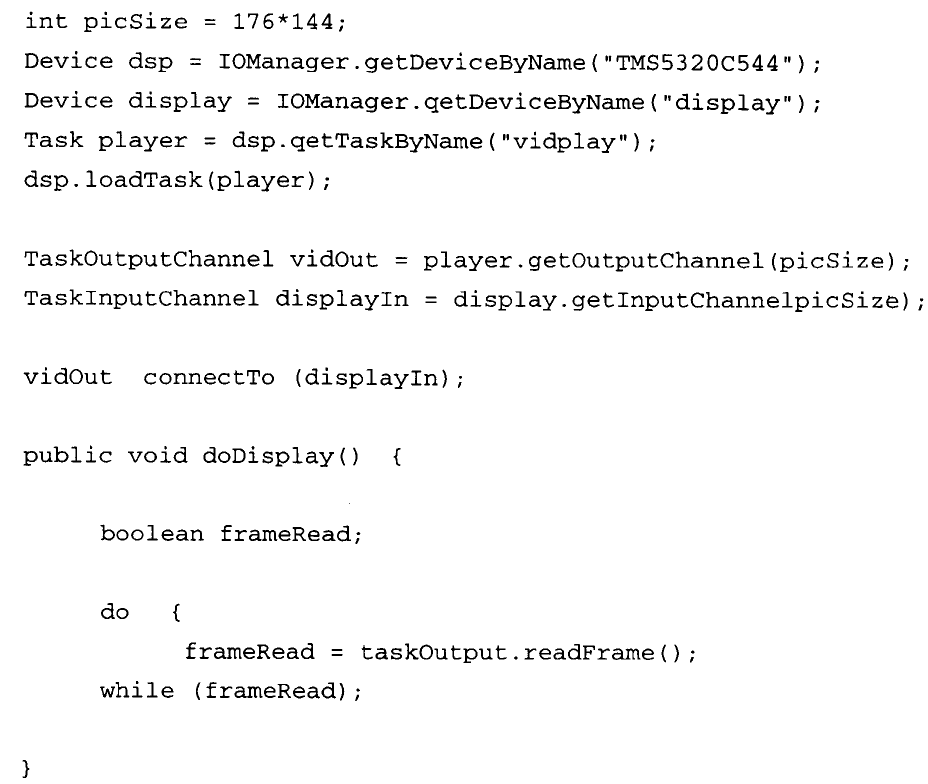

This example is virtually identical to the network device example except that the data transfer between the DSP task 60 and the device occurs in the opposite direction.

The I/O manager 29 implements the system control and data transfer of connected I/O channels. There are four components in the system that can have channels associated with them (see Fig. 8). These are Java applications 40, host tasks 48, DSP tasks 60, and device drivers 54. A host task 48 is a functional native host component with a task wrapper. A device driver 54 (Fig. 7) might also be considered a host task.

Each component has its own interface to the I/O manager. Host tasks 48 and device drivers 54 are the only modules that directly interact with the I/O manager 29 through the I/O manager interface 87. Java applications 40 use input and output channel objects via the Java Task Channel Interface 52. Communication with DSP tasks is done through the host-DSP interface driver 66.

Each of these individual components can be connected together through the I/O manager 29. Then an output channel that is connected to an input channel writes data, the I/O manager 29 negotiates buffer access between the connected input and output channels so that the data is placed where it will be read by the input channel.

Fig. 9 illustrates the basics of a task input channel object. Each input channel has an associated chain of frame buffers 61 to which it writes data. When an application or device writes data to a task input channel, it is placed in the frame buffer. The frame buffer is then sent to the task through the host-DSP interface driver or other I/O manager interface.

The concept behind the I/O manager 29 is to abstract all I/O tasks and devices in the system so that they can be viewed has having input or output channels that fit the above model. For example, an ethernet network driver might use a frame buffer of 1500 bytes. This frame buffer could be attached to a task input channel through the I/O manager 29 so that it could be directly written to a DSP task using the host-DSP interface. With this architecture, the DSP tasks can read and write data on host devices without requiring the developer to implement any host code.

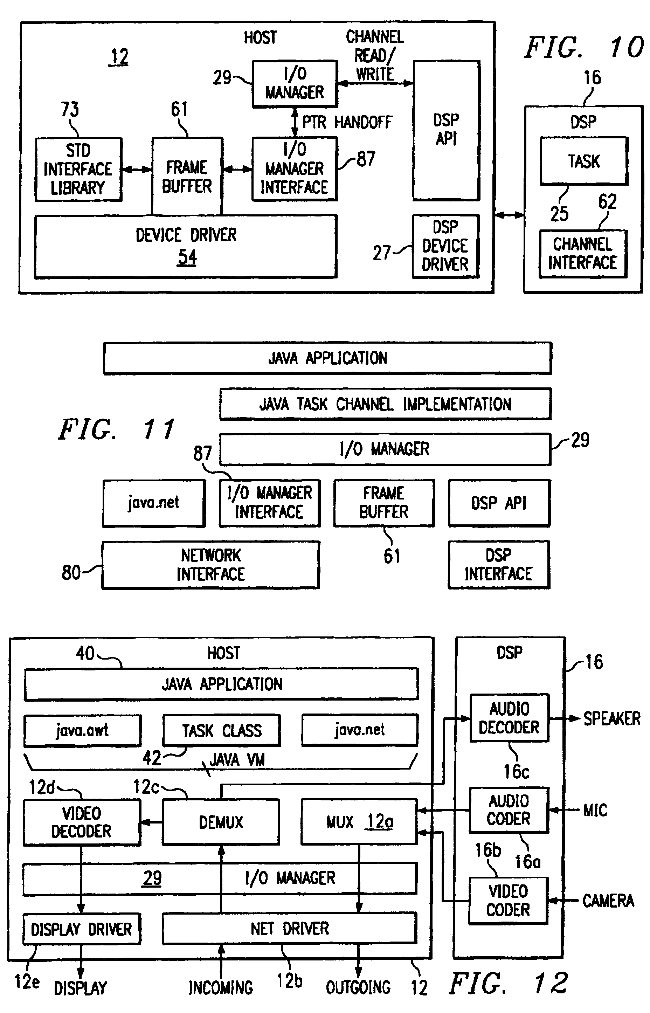

The example in Fig. 10 shows the I/O manager interface 87 to the device driver 54 sitting directly on top of the driver in the module hierarchy. Depending on the device, the I/O manager interface 87 might sit on top of the standard interface library 73 for the device. For example, the I/O manager interface 87 for a network device may use socket library calls if they provide direct access to the buffered device data.

The I/O manager interface 87 consists, for example, of calls to notify the I/O manager 29 that another frame buffer is ready, pass a copy of the frame buffer 61 or a pointer to it to the I/O manager 29, signal frame buffer exceptions to the I/O manager 29, and provide information necessary for supplying frame buffers for the device.

Fig. 11 illustrates the architectural implementation of a task input channel on a network device driver. The scenario is a Java application 21 that creates an input channel on the network device driver and connects it to an output channel from a DSP task. The result is that output from the DSP task is sent directly over the network without passing through the Java application. Fig. 11 shows the hierarchy of software modules to accomplish this. The java.net module is not used, but is in the diagram to show its implementation level relative to the other components.

Here is how a possible Java implementation might look:

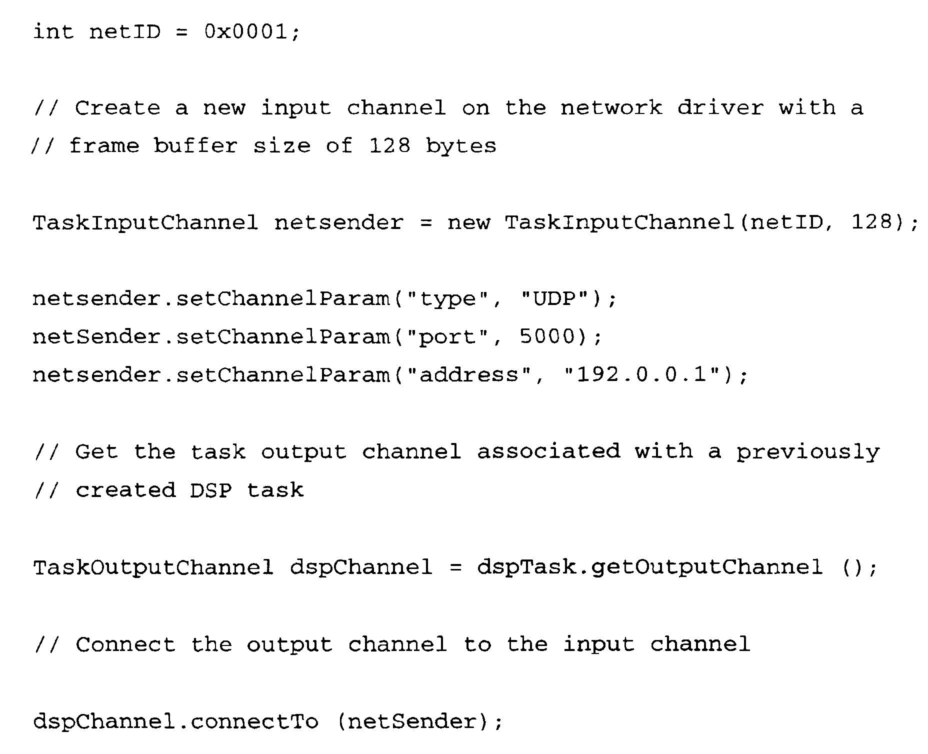

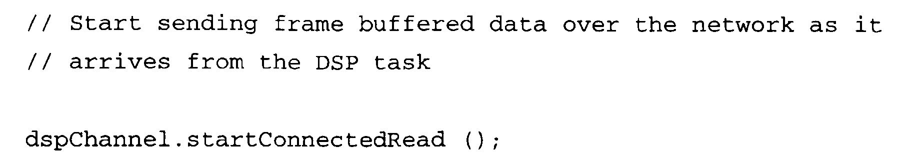

The I/O manager interface module 87 of the network driver will handle placing the necessary network headers on the frame buffer data and sending it out on the network via interface 80. The I/O manager 29 handles passing the data from the DSP task to the network driver's I/O manager interface 87. A copy of the task's output frame buffer might be passed or an actual pointer to the buffer might be passed depending on the system operating constraints.

In this example, it is possible for the I/O manager interface 71 of the network device to be implemented on top of the standard network library interface for the device. The code below shows the key pieces necessary in the I/O manager interface implementation. The commented sections of code do not necessarily all reside in the same function block.

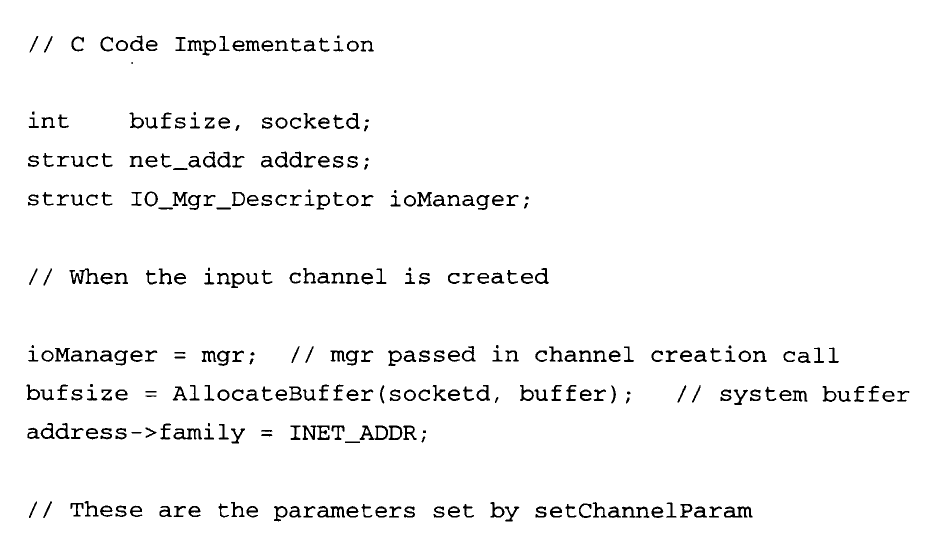

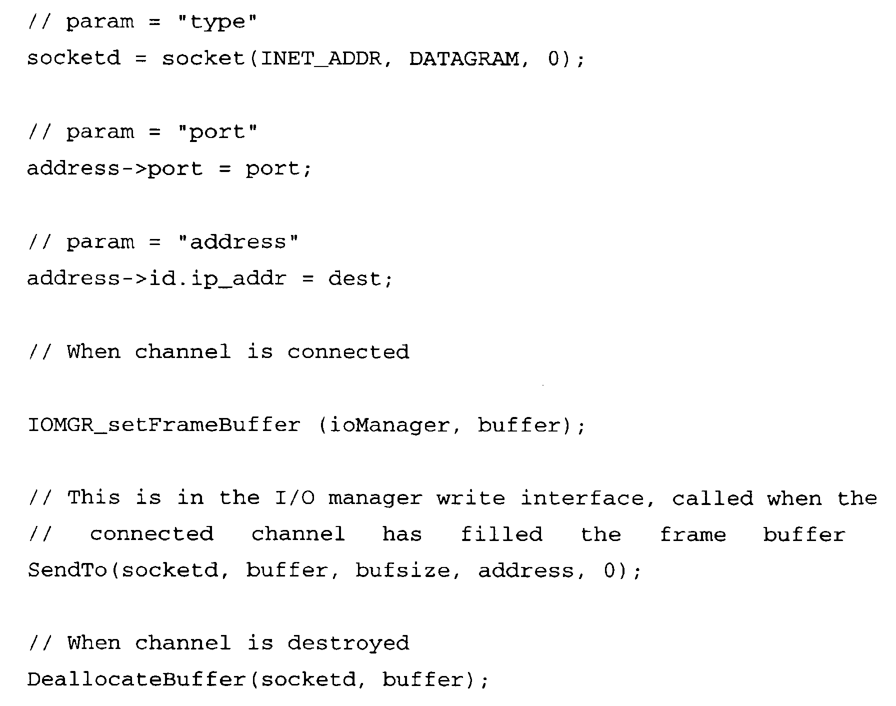

Actual implementation will be more complex since the system buffers allocated by the network interface will not necessarily be the size of the frame buffer. The I/O manager 29 may have a queue of frame buffers that it allocates for use by connected channels.

The I/O manager 29 uses the host-DSP interface to read the data from the DSP task and then calls a write function in the network manager interface 80 to send the frame buffer on the network.

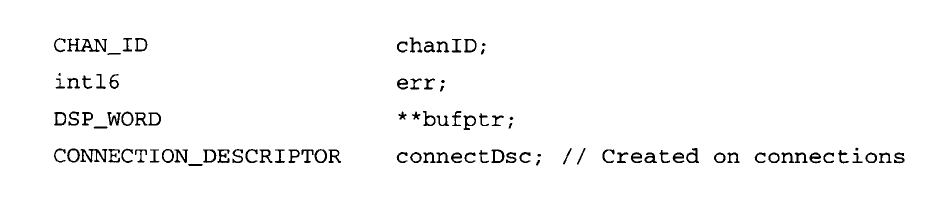

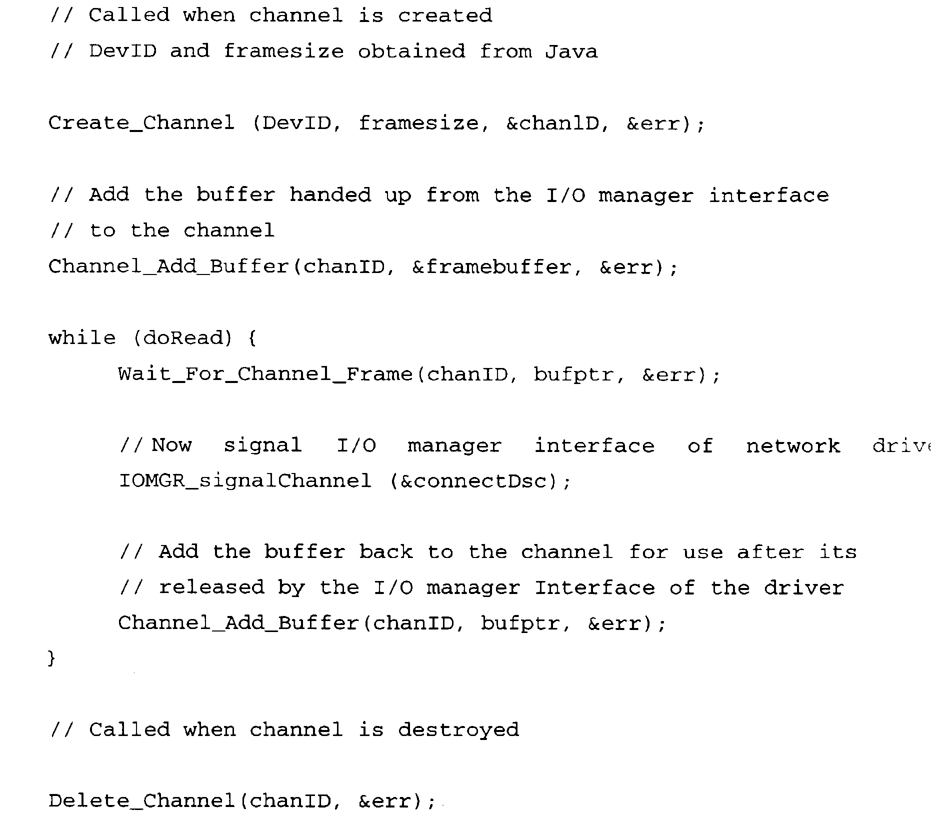

As in the previous code, these commented snippets are not necessarily in the same function blocks. The I/O manager 29 creates channels for DSP tasks that will interface to host modules, handle adding frame buffers 61 to DSP task channels when they are released by device drivers 54 or host tasks 48, and signaling device drivers 54 or host tasks 48 when a DSP task has filled a frame buffer for reading.

A multiple distributed task example is illustrated in Fig. 12. A video conferencing application might make full use of all the communication possibilities offered through this architecture. The arrows in Fig. 12 represent channels connecting tasks with other tasks and devices. For example, microphone and camera outputs are coupled to the audio coder 16a and video coder 16b of the DSP and they are passed through the host 12 through the multiplexer 12a, I/O manager 29 and network driver 12b. The incoming video and sound on the network are applied to the network driver 13b and demultiplexed at 12c and the video is applied via the video decoder 12d, the I/O manager 29, the display driver 12e to the display. The audio is applied to the audio decoder 16 and the decoded audio to the speaker. The main role of the Java application is configuring and connecting the software components and channels. In reality, there would also be interaction with the display and network from Java. This is not shown to avoid complicating the picture further.

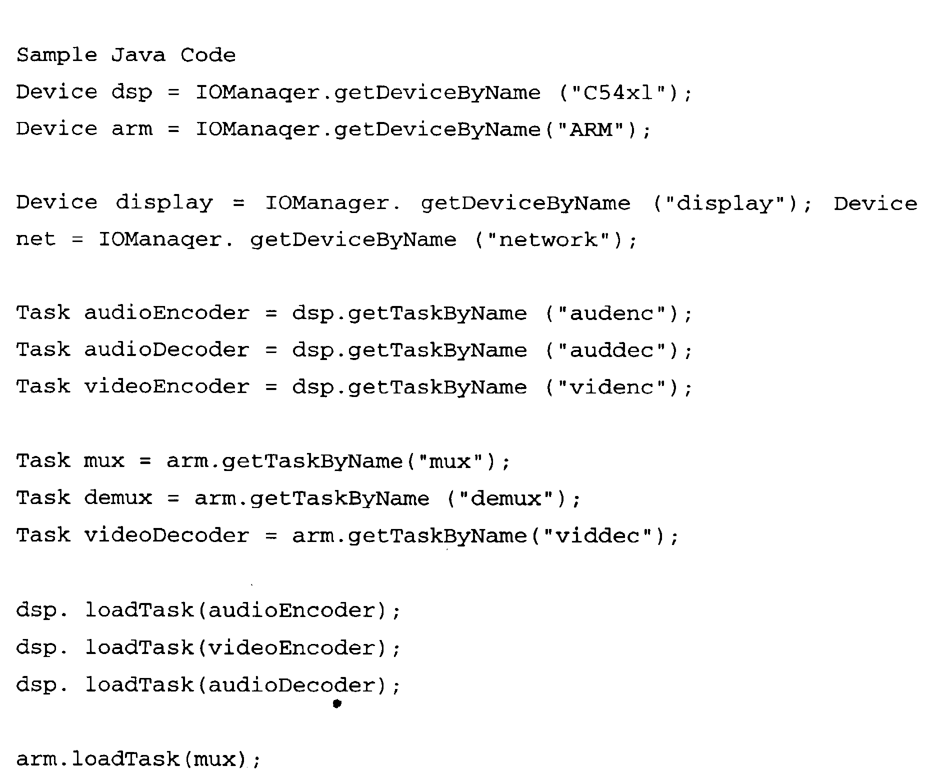

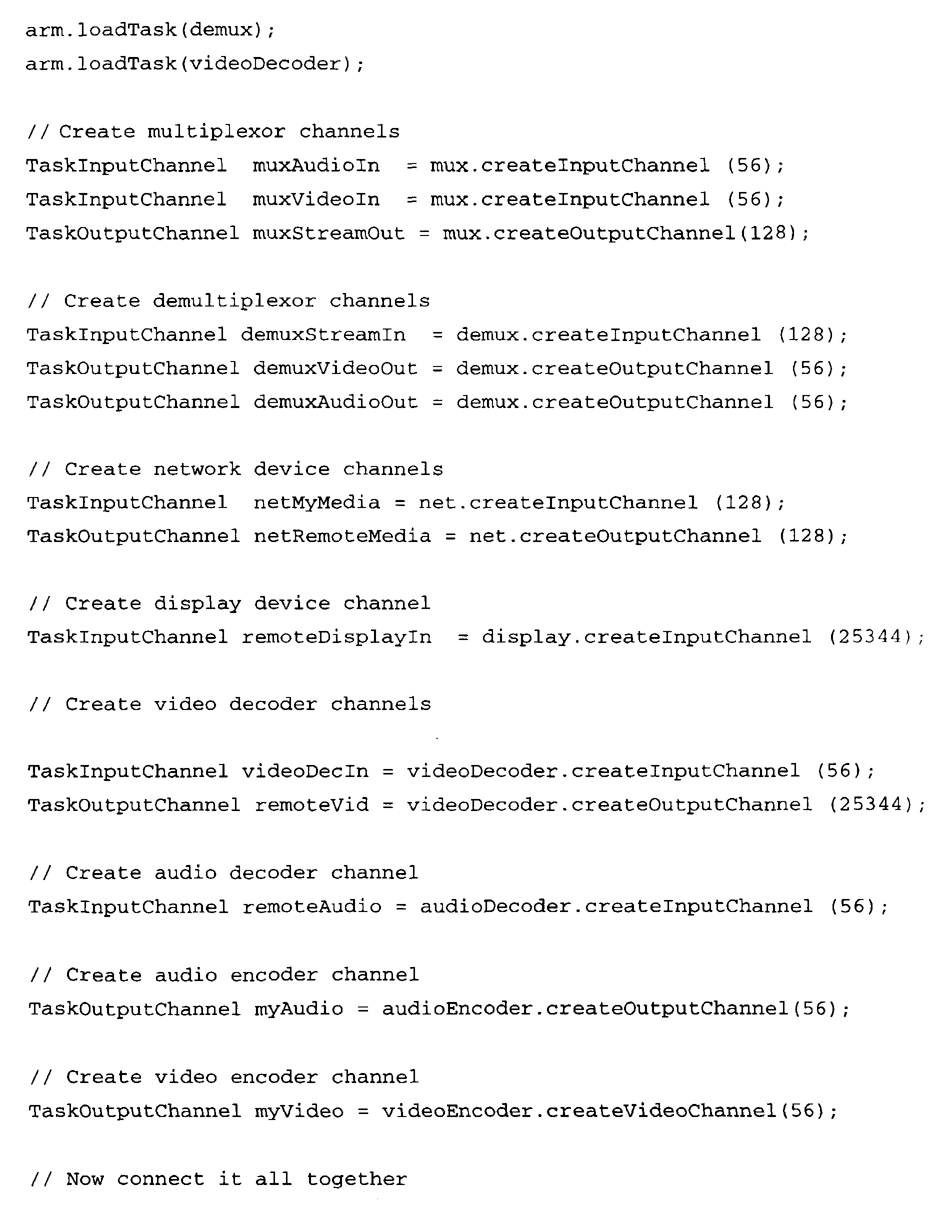

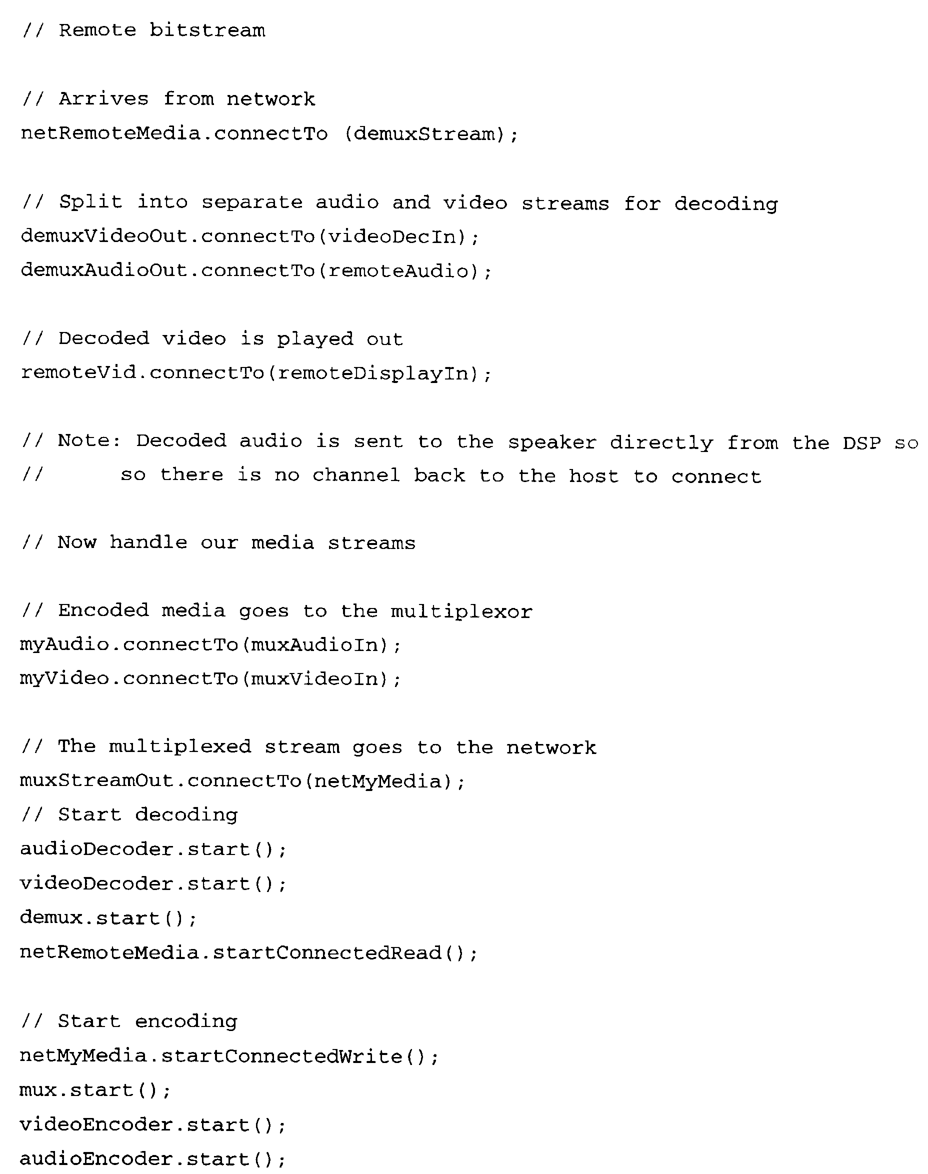

## Claims

1. A method of passing data between Java application to a first processing task comprising:
creating a task input channel on a first task to allow communication with a task from an application;
writing data to the task input channel on the first task using said application to send data to said first processing task; and
creating a task output channel on said first task to allow said application to read from the first processing task.

2. The method of Claim 1 wherein said first processing task is a DSP task.

3. The method of Claim 1 including the step of:
said Java application reading data from a network before passing data to said first processing task.

4. The method of Claim 1 including the step of:
providing an I/O manager connecting said input and output channels under control of said Java application wherein said Java application receives control information for a bitstream but actual bitstream is passed through a task output channel on a network driver to said task input channel on said first processing task.

5. The method of Claim 1 wherein said first task is performed on a DSP.

6. A method for providing controlled data flow between tasks executed on a host processor and tasks on a coprocessor comprising:
creating an input channel on a coprocessor; and
providing a Java application running on a host machine to write data to the task input channel on said coprocessor.

7. The method of Claim 6 including the step of creating on said coprocessor task an output channel to allow said Java application to read from said coprocessor task.

8. The method of Claim 6 wherein said coprocessor task is a DSP task.

9. The method of Claim 6 including the step of providing an I/O manager that sets the location the output channel tasks writes to and the location the input channel is to read from.

10. A system for communication between tasks or between devices that execute on a host processor and tasks or devices that execute on a coprocessor comprising:
task input and output channels,
said tasks and devices read input data through task input channels and write data through task output channels, and
an I/O manager for connecting and controlling said input and output channels to said tasks and devices.

11. A system for communication between signal processing task on a first processor and signal processing task on a second processor comprising:
a data source,
a data output device,
said first signal processing task having input channel coupled to said data source,
said second signal processing task coupled to said data output device, and
an I/O manager for connecting between said input and output channels and controlling data flow between said data source and data output device.

12. The system of Claim 11 wherein said data source provides data and control signals and said system includes an application program responsive to said control signals for controlling said I/O manager such that said data flows directly through said input and output channels specified by said I/O manager.
